# EUROPEAN PATENT APPLICATION

(11) **EP 3 667 381 A1**
(43) Date of publication of application: **17.06.2020**
(21) Application number: 19214353.5
(22) Date of filing: 09.12.2019
(51) Int. Cl.: G02B 6/44

(54) **OPTICAL CABLE FOR INDOOR INSTALLATION**

(30) Priority: 11.12.2018 IT 201800010988
(71) Applicant: Prysmian S.p.A., 20126 Milano (IT)
(72) Inventor: PERA GOLZALVEZ, Gerard, 20126 MILAN (IT); ABBIATI, Fabio, 20126 MILAN (IT); CESCHIAT, Davide, 20126 MILAN (IT); LAZZARIN, Nayane, 20126 MILAN (IT); MARITANO, Mauro, 20126 MILAN (IT)
(74) Representative: Pietra, Giulia

(57) **Abstract**

Disclosed is an optical cable comprising an outer sheath housing a number of optical fibers, wherein the outer sheath has an outer cross-section in the shape of a hexagon. The outer sheath then exhibits six flat surfaces longitudinally extending along the whole cable length. Anyone of such flat surfaces may be covered with a thin layer of glue and then be attached to the wall surface. As this surface is flat, a reliable and durable fixing of the cable may be achieved using an amount of glue which is far reduced in comparison to the amounts of glue typically required for fixing known cables having a round cross-section.

## Description

### BACKGROUND

The present disclosure relates to the field of optical fibers and optical cables suitable for indoor installation. In particular, the present disclosure relates to an optical cable for indoor installation.

### STATE OF THE ART

As known, an optical cable typically comprises an optical core including one or more optical fibers and an outer sheath enclosing the optical core. The outer sheath is typically made of a polymeric material and has the function of grouping the optical fibers and protecting the optical core from the mechanical point of view.

Within the outer sheath, the optical fibers may be arranged in various ways. In particular, in the so-called "loose tube cables", the optical fibers are loosely arranged within the outer sheath. Optionally, the optical fibers may be grouped in one or more bundles, each bundle being enclosed by a respective buffer tube. Within each buffer tube, the individual fibers are free to move relative to one another.

Loose tube cables are typically used for applications where the optical fibers must be individually extracted from the cable and spliced, for example in FTTH (Fiber-To-The-Home) and FTTP (Fiber-To-The-Premise) applications. For instance, drop cables of FTTH or FTTP networks are typically implemented as loose tube cables with a particularly reduced diameter (less than 10 mm).

The optical cables for FTTH or FTTP networks are typically installed in indoor environments such as offices, apartments or houses. Different ways are known for installing optical cables in indoor environments. For example, the optical cables may be laid in ducts which run within the walls or which are attached to the wall surfaces. Alternatively, the optical cables may be directly attached to the wall surfaces, for example by means of glue. This latter arrangement, though easier to be deployed, makes the optical cables visible at naked-eye on the wall surface. In this situation, it is desirable that the optical cables have a reduced visual impact and match with the surrounding environment as much as possible, so as not to create unpleasant visual effects.

US 2018/0188461 discloses an optical cable invisibly formed so as to be substantially transparent. The optical cable comprises a plurality of optical fibers, each fiber comprising a core, a clad and optionally a coating layer made of a transparent resin (e.g. PVC, polyester elastomer, polyester, polyethylene or nylon, either alone or in combination). The cable also comprises a transparent sheath (made e.g. of PVC) surrounding the fibers. A transparent filler fills the space between the optical fibers and the sheath, for example yarns such as aramid fiber or glass fiber.

### SUMMARY

The Applicant has noticed that the optical cable of US 2018/0188461 exhibits some drawbacks.

In particular, while it might have a reduced visual impact as required in indoor environments, the installation of the optical cable of US 2018/0188461 by direct gluing to a wall surface may be difficult. Providing a reliable and durable fixing of the optical cable to the surface of a wall may be indeed problematic, for a number of reasons. For example, the wall surface may exhibit poor adhesion properties, e.g. due to the presence of roughness or relief textures or to treatment with varnish, polished plaster, etc. In order to increase reliability and durability of the fixing, a large amount of glue and/or a particularly strong glue is required. In any case, the installation complexity and cost are both increased, and this is particularly undesirable for FTTH and FTTP applications.

The Applicant has then faced the problem of providing an optical cable for indoor installation which overcomes the aforesaid drawbacks.

In particular, the Applicant has tackled the problem of providing an optical cable for indoor installation which may be reliably and durably fixed to a wall surface by a reduced amount of glue and without requiring use of particularly strong and costly glues.

According to embodiments of the present disclosure, the above problem is solved by an optical cable comprising an outer sheath housing a number of optical fibers, wherein the outer sheath has an outer cross-section in the shape of a hexagon.

In the present description and in the claims, the expression "hexagon" will designate a plane figure with six sides and six internal angles of about 120° (where "about" means that a tolerance of ± 5° is allowed), whose corners may be either sharp or blunted.

Since the outer sheath of the optical cable has an outer cross-section in the shape of a hexagon, it exhibits at least one flat surface (in particular, six flat surfaces) longitudinally extending along the whole cable length. Anyone of such flat surfaces may be covered with a thin layer of glue and then be attached to the wall surface. As this surface is flat (or substantially flat, short of imperfections due to the manufacturing process), a reliable and durable fixing of the cable may be achieved using an amount of glue which is far reduced in comparison to the amounts of glue typically required for fixing known cables having a round cross-section.

For example, the Applicant has estimated that for fixing a known cable with round cross-section having an outer diameter of 2 mm, a layer of glue with a thickness of 0.5-1 mm is typically required. This is due to the fact that, in order to ensure a stable fixing, the glue layer shall be thick enough to partially embrace the round cable and provide a contact surface of a certain width between optical cable and wall surface.

With the outer cross-section section in the shape of a hexagon, instead, an optical cable with an outer diameter of about 2 mm (wherein the outer diameter is defined as the diameter of the circumscribed circle of the hexagon) may be reliably and durably fixed with a layer of glue with a thickness of 10-50 microns applied to anyone of the flat surfaces of the outer sheath. Further, no particularly strong and/or costly glues are needed. Hence, the installation complexity and cost are both advantageously decreased, which is particularly desirable for FTTH and FTTP applications.

According to an embodiment of the present disclosure, the outer sheath of the cable is an uncolored, non opaque outer sheath.

In the present description and in the claims, the expression "non opaque" will designate a material allowing light in the visible spectrum to pass through, wherein "visible spectrum" designates a wavelength range from 390 nm to 700 nm. A non opaque material may be either a translucent material or a transparent material. In a translucent material, photons are scattered at either of the two surfaces of the translucent material (where there is a change of the refraction index) or within the thickness of the material. In a transparent material (e.g. a glass-like material), instead, light passes through without being scattered, photons being refracted according to the known Snell's law.

An uncolored, non opaque outer sheath with outer cross-section in the shape of a hexagon provides a cable with a particularly reduced visual impact, as discussed below.

On the one hand, the uncolored, non opaque outer sheath as such has a more reduced visual impact in comparison to a colored, opaque outer sheath.

On the other hand, non-opaqueness of the outer sheath makes its content (typically, optical fibers) visible to the naked eye. This in principle could make the cable visually impacting. However, when light rays impinge on the surface of an optical cable with an uncolored, non opaque outer sheath, they are reflected and refracted at the interface between air and outer sheath, the refraction being governed by the known Snell's law. Then, the light rays are reflected within the cable (or on the wall surface behind it) and finally they are refracted again at the interface between outer sheath and air according to the Snell's law.

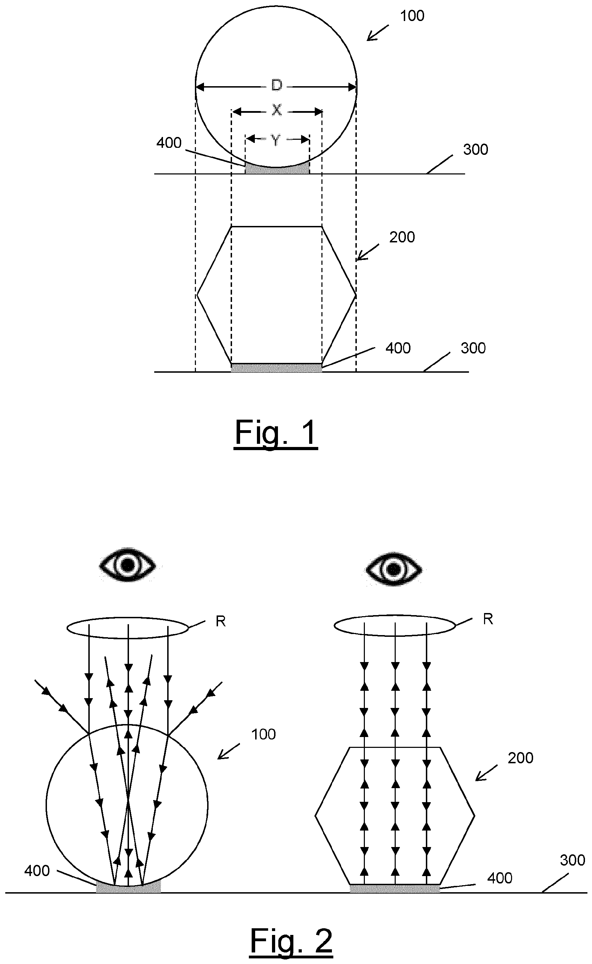

As it will be better explained with reference to Figure 2, in case of an optical cable with an uncolored, non opaque round outer sheath (as the cable of US 2018/0188461), parallel impinging light rays are reflected and refracted by the cable in different directions due to the round profile of the interfaces between air and outer sheath. In case of an optical cable with uncolored, non opaque hexagonal outer sheath, instead, the impinging light rays encounter on their path two parallel flat surfaces of the hexagonal outer sheath. Hence, the light rays continue being parallel in spite of reflection and refraction by the cable, thanks to the flat profile of the interfaces between air and outer sheath. As a result, the outer sheath with hexagonal outer cross-section makes its content (typically, optical fibers) less visible to the naked eye than the outer sheath with round cross-section.

This is particularly advantageous, especially when the optical fibers arranged within the outer sheath are opaque and colored, for example according to the known standard TIA-598-C (2005) Optical Fiber Cable Color Coding defining an identification scheme for optical fibers or buffered fibers, based on twelve standards colours (blue, orange, green, brown, slate, white, red, black, yellow, violet, rose, aqua). In this case, the uncolored, non opaque outer sheath with hexagonal outer cross-section of the cable of the present disclosure makes the colored optical fibers less visible at the naked eye, thereby decreasing the visual impact of the cable and minimizing the risk to create unpleasant visual effects in the indoor environment where the cable is installed.

Therefore, according to a first aspect, the present disclosure provides for an optical cable comprising an outer sheath housing a number of optical fibers, and having an outer cross-section in the shape of a hexagon.

The outer sheath may comprise a single layer or two or more layers made of different materials.

According to an embodiment, the outer sheath has a round inner cross-section.

In an embodiment, the outer sheath has an outer diameter lower than 10 mm.

In an embodiment, the outer sheath has an inner diameter lower than 9 mm.

In an embodiment, the optical cable of the present description has an outer sheath which is an uncolored, non opaque outer sheath.

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The present disclosure, in at least one of the aforementioned aspects, can be implemented according to one or more of the following embodiments, optionally combined together.

For the purpose of the present description and of the appended claims, the words "a" or "an" should be read to include one or at least one and the singular also includes the plural unless it is obvious that it is meant otherwise. This is done merely for convenience and to give a general sense of the disclosure.

### BRIEF DESCRIPTION OF THE FIGURES

The present disclosure will become fully clear after reading the following detailed description, given by way of example and not of limitation, with reference to the attached drawings wherein:
- Figure 1 schematically shows an optical cable according to embodiments of the present disclosure and a known optical cable;
- Figure 2 schematically shows the light rays effect on an optical cable according to embodiments of the present disclosure and a known optical cable;
- Figure 3 schematically shows an optical cable for indoor installation according to a first embodiment of the present disclosure; and
- Figure 4 schematically shows an optical cable for indoor installation according to a second embodiment of the present disclosure.

### DETAILED DESCRIPTION

Figure 1 shows the contour of a known optical cable 100 with round cross-section and the contour of an optical cable 200 with hexagonal outer cross-section according to embodiments of the present disclosure. The two cables substantially have the same outer diameter D (the outer diameter of cable 200 being defined as the diameter of the circumscribed circle of the hexagon).

Both the cables 100 and 200 are fixed to a wall surface 300 by means of respective layers of glue 400 having a same central thickness. It may be appreciated that, in the optical cable 200 with hexagonal outer cross-section, the width X of the contact surface between cable outer sheath and wall surface 300 is larger than the width Y of the contact surface between the outer sheath of the known, round optical cable 100 and wall surface 300. Since the width X is larger than the width Y, the fixing is more stable and more reliable. Hence, with the optical cable 200 with hexagonal outer cross-section, a same thickness of glue advantageously guarantees a more reliable and stable fixing of the cable to the wall surface.

In Figure 2, the light rays effects on a known optical cable 100 having with round outer sheath and on an optical cable 200 with hexagonal outer sheath according to an embodiment of the present disclosure are depicted.

In case of an optical cable 100, parallel impinging light rays R are reflected and refracted by the cable round surfaces in different directions due to the round profile of the interfaces between air and outer sheath. In case of an optical cable 200, instead, the impinging light rays R encounter on their path two parallel flat surfaces of the hexagonal outer sheath, namely the flat surface in contact with the wall surface 300 and the opposite one. Hence, the light rays R continue being parallel in spite of reflection and refraction by the cable, thanks to the flat profile of the interfaces between air and outer sheath. As a result, the outer sheath with hexagonal outer cross-section of cable 200 advantageously makes its content (typically, optical fibers) less visible to the naked eye than the outer sheath with round cross-section of cable 100.

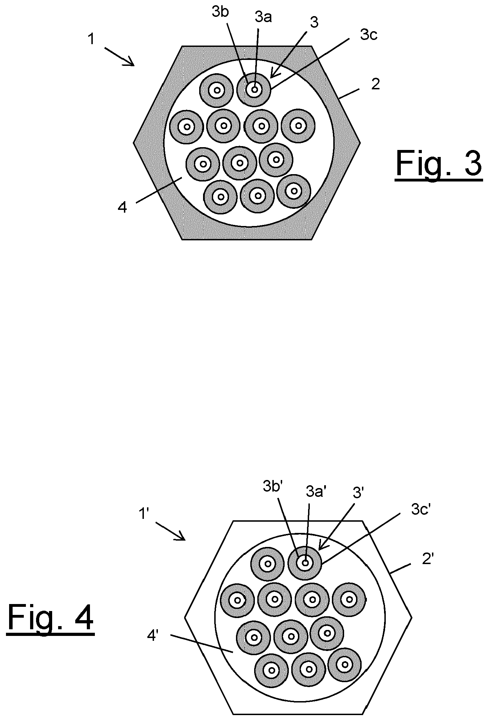

In Figure 3, an optical cable for indoor installation according to a first embodiment of the present disclosure is indicated by reference number 1.

The optical cable 1 comprises an outer sheath 2 and a plurality of optical fibers 3.

The outer sheath 2 is made of a polymeric material. According to a first embodiment, the polymeric material is an opaque polymeric material, for example HDPE (high density polyethylene) polyvinylchloride or low smoke zero halogen polymers like those disclosed, for example, in EP1940932.

The outer sheath 2 may comprise a single layer (as shown in Figure 3) or two or more layers made of different materials.

The outer sheath 2 has an outer cross-section in the shape of a hexagon, namely a plane figure with six internal angles of about 120° each, wherein the term "about" indicates a tolerance of ± 5°. Though in Figure 3 the outer sheath 2 is schematically depicted with six sharp corners, it has to be understood that the outer sheath 2 may exhibit instead blunted or smooth corners, due to the extrusion process by which the outer sheath 2 is manufactured. Also, the sides of the hexagon may exhibit imperfections due to the manufacturing process, namely deviations from the perfectly straight profile.

In the present embodiment, the inner cross-section of the outer sheath 2 is round.

The outer diameter of the outer sheath 2 - which is defined as the diameter of the circumscribed circle of the hexagon, as depicted in Figure 1 with reference to the cable 200 - can be lower than 10 mm, for example it is comprised between 1 mm and 10 mm, or between 2 mm and 5 mm. In an embodiment, the outer diameter of the outer sheath 2 may be of 2.5 mm.

The inner diameter of the outer sheath 2 - which is defined as the diameter round inner cross section - can be lower than 9 mm, for example it is comprised between 1.6 mm and 1.9 mm.

The thickness of the outer sheath 2 can be comprised between 0.1 mm and 0.5 mm, for example from 0.2 mm and 0.3 mm.

The process of manufacturing cables having a hexagonal outer cross-section is similar to that of customary (round shaped) fiber optic cables, except for the use of a suitably special shaped die for extruding a hexagonal shaped outer sheath.

In the present embodiment, each optical fiber 3 is an optical fiber for communication applications, comprising a core 3a, a cladding 3b and a coating 3c.

The core 3a and the cladding 3b are made of uncolored, transparent materials, typically silica-based materials. The refractive index of the transparent material used for the core 3a is higher than the transparent material used for the cladding 3b, both refractive indexes being measured at the infrared wavelength of the light which is intended to be guided by the optical fiber 3. Such wavelength is typically comprised between 750 nm and 1400 nm (near-infrared spectrum), for example 550 nm. This way, an infrared light coupled at one end of the optical fiber 3 is confined within the core 3a by total internal reflection at the interface between core 3a and cladding 3b and then longitudinally propagates along the optical fiber 3.

The optical fibers 3 can be single-mode fibers, namely they support a single propagation path of the infrared light through the core 3a. In single-mode fibers, the diameter of the core 3a is typically comprised between 8 and 10 microns and the diameter of the cladding 3b can be of about 125 microns.

The coating 3c advantageously protects the optical fiber 3 from the mechanical point of view and may also improve its tensile strength. The diameter of the coating 3c can be comprised between 180 microns and 400 microns.

According to the first embodiment, the coating 3c of each optical fiber is made of a resin. The coatings 3c of the optical fibers 3 can be colored by different colors, so as to enable a field operator to distinguish them, once they have been exposed by removing a length of the outer sheath 2. For example, the coatings 3c of the optical fibers 3 may be colored according to the known standard TIA-598-C (2005) Optical Fiber Cable Color Coding defining an identification scheme for optical fibers or buffered fibers, based on twelve standards colours (blue, orange, green, brown, slate, white, red, black, yellow, violet, rose, aqua).

In an embodiment, the optical cable 1 may comprise a filler 4 filling the space between the optical fibers 3 and the inner surface of the outer sheath 2 and/or the interstitial spaces between the optical fibers 3. The filler 4 can be a gel. Alternatively, no filler is provided for filling the space between the optical fibers 3, thus making the cable a dry cable.

The filler 4 in the interstitial spaces between the optical fibers 3 may be provided by pre-wetting the outer surface of each optical fiber 3 with a small quantity of gel when the outer sheath 2 is extruded.

In an embodiment, the optical fibers 3 are loosely arranged within the outer sheath 2. For example, the optical fibers 3 may be arranged longitudinally and substantially parallel to the cable axis.

In a non-illustrated embodiment, the optical fibers 3 are grouped in one or more bundles, each bundle being enclosed by a respective buffer tube made of a polymeric material.

As discussed above, since the outer sheath 2 of the optical cable 1 according to the first embodiment has an outer cross-section in the shape of a hexagon, it exhibits at least one flat surfaces (in particular, six flat surfaces) longitudinally extending along the whole cable length. Anyone of such flat surfaces may be covered with a thin layer of glue and then be attached to the wall surface. Since this surface is flat (or substantially flat, short of imperfections due to the manufacturing process), a reliable and durable fixing of the cable 1 may be achieved using an amount of glue which is far reduced in comparison to the amounts of glue typically required for fixing known cables having a round cross-section. Besides, as described above with reference to Figure 1, a same amount of glue advantageously provides a much more reliable and durable fixing in comparison to known cables having a round cross-section, because a same amount of glue results in a wider contact surface between outer sheath of the cable and wall surface.

In Figure 4, an optical cable for indoor installation according to a second embodiment of the present disclosure is indicated by reference number 1'.

Also the cable 1' according to the second embodiment comprises an outer sheath 2' and a plurality of optical fibers 3'.

The shape of the outer sheath 2' according to the second embodiment is the same as the outer sheath 2 according to the first embodiment, in particular the hexagonal shape of its outer cross-section. Hence, a detailed description will not be repeated.

According to the second embodiment, the outer sheath 2' is made of an uncolored, non opaque material, for example an uncolored, non opaque polymeric material, allowing the optical fibers 3 enclosed therein to be seen at naked eye. For example, the outer sheath 2' may comprise PC (polycarbonate), PA 12 (polyamide 12), HDPE (high density polyethylene) or PVC (polyvinyl chloride) .

The outer sheath 2' may comprise a single layer (as shown in Figure 4) or two or more layers made of different uncolored, non opaque materials. For example, the outer sheath 2' may comprises an innermost layer and an outermost layer, the innermost layer being made of uncolored transparent PC (polycarbonate) and the outermost layer being a coating of uncolored transparent PA 12 (polyamide 12) having a thickness of 0.05 mm.

In the present embodiment, each optical fiber 3' is an optical fiber for communication applications, comprising a core 3a', a cladding 3b' and a coating 3c'.

According to the second embodiment, the optical fibers 3' are single-mode fibers with coloured opaque coatings, as described above in connection with the first embodiment. Hence, a detailed description of the optical fibers 3' will not be repeated.

In an embodiment, the optical cable 1' according to the second embodiment may also comprise a filler 4' filling the space between the optical fibers 3' and the inner surface of the outer sheath 2' and/or the interstitial spaces between the optical fibers 3'. The filler 4' can be a gel, for example an uncolored, non opaque gel. Alternatively, no filler is provided for filling the space between the optical fibers 3, thus making the cable a dry cable.

The filler 4' in the interstitial spaces between the optical fibers 3' may be provided by pre-wetting the outer surface of each optical fiber 3' with a small quantity of gel when the outer sheath 2' is extruded.

In an embodiment, the optical fibers 3' are loosely arranged within the outer sheath 2'. For example, the optical fibers 3' may be arranged longitudinally and substantially parallel to the cable axis.

In a non-illustrated embodiment, the optical fibers 3' are grouped in one or more bundles, each bundle being enclosed by a respective buffer tube made of a polymeric material.

Since the outer sheath 2' of the optical cable 1' according to the second embodiment has an outer cross-section in the shape of a hexagon, it exhibits the same advantages discussed above in connection with the first embodiment, namely it may be fixed to a wall surface by gluing in a very reliable and stable way.

In addition, advantageously, the uncolored, non opaque outer sheath 2' according to the second embodiment, having an outer cross-section in the shape of a hexagon, provides a cable with a particularly reduced visual impact.

First, the uncolored, non opaque outer sheath 2' as such has a more reduced visual impact in comparison to the colored opaque outer sheath 2 according to the first embodiment.

Further, as discussed above with reference to Figure 2, the outer cross-section in the shape of a hexagon of the outer sheath 2' is such that parallel impinging light rays continue being parallel in spite of reflection and refraction at the interfaces between air and outer sheath 2'. As a result, the outer sheath 2' with hexagonal outer cross-section of cable 1' according to the second embodiment makes its content (namely, the colored optical fibers 3') less visible at the naked eye than the outer sheath with round cross-section of a known cable.

In spite of the presence of colored optical fibers 3', the visual impact of the cable 1' and the risk to create unpleasant visual effects in the indoor environment where the cable 1' is installed are substantially minimized.

## Claims

1. An optical cable (1, 1') comprising an outer sheath (2, 2') housing a number of optical fibers (3, 3'), wherein the outer sheath (2, 2') has an outer cross-section in the shape of a hexagon.

2. The optical cable (1, 1') according to claim 1, wherein the outer sheath (2, 2') comprise a single layer or two or more layers made of different materials.

3. The optical cable (1, 1') according to claim 1, wherein the outer sheath (2, 2') has a round inner cross-section.

4. The optical cable (1, 1') according to claim 1, wherein the outer sheath (2, 2') has an outer diameter lower than 10 mm.

5. The optical cable (1, 1') according to claim 1, wherein the outer sheath (2, 2') has an inner diameter lower than 9 mm.

6. The optical cable (1') according to claim 1, wherein the outer sheath (2') is an uncolored, non opaque outer sheath (2').
